# FASCICULE DE BREVET EUROPEEN

(11) **EP 4 025 526 B1**
(45) Date de publication et mention de la délivrance du brevet: **22.07.2026**
(21) Numéro de dépôt: 20797030.2
(22) Date de dépôt: 02.09.2020
(51) Int. Cl.: B65G 1/137, E04H 14/00, G06Q 10/08, B65G 17/48, B65G 17/20, E04H 3/04, G06Q 10/087, G06Q 30/06

(54) **SYSTEME DE REMISE D'UNE COMMANDE ET PROCEDE CORRESPONDANT**
SYSTEM ZUR LIEFERUNG EINER BESTELLUNG UND ENTSPRECHENDES VERFAHREN
SYSTEM FOR DELIVERING AN ORDER AND CORRESPONDING METHOD

(30) Priorité: 02.09.2019 FR 1909641; 12.11.2019 FR 1912642
(43) Date de publication de la demande: 13.07.2022
(73) Titulaire: Exotec Product France, 59170 Croix (FR)
(72) Inventeur: MOULIN, Romain, 39800 LILLE (FR); HEITZ, Renaud, 59650 VILLENEUVE-D'ASCQ (FR); BAULARD, Gilles, 31470 FONTENILLES (FR)
(74) Mandataire: Plasseraud IP
(86) Numéro de dépôt international: PCT/EP2020/074489
(87) Numéro de publication internationale: WO 2021/043837

(56) Documents cités:
- EP-A1- 1 801 040
- EP-A1- 1 801 040
- WO-A1-2018/162123
- WO-A1-2018/162123
- BE-A3- 1 019 931
- BE-A3- 1 019 931
- DE-A1- 10 147 551
- DE-A1- 10 147 551
- DE-A1- 102009 014 457
- DE-A1- 102009 014 457
- DE-A1- 19 717 352
- DE-A1- 19 717 352
- FR-A1- 2 667 849
- FR-A1- 2 667 849
- GB-A- 2 294 437
- GB-A- 2 294 437
- JP-A- 2002 249 209
- JP-A- 2002 249 209
- US-A- 3 647 026
- US-A- 3 647 026
- US-B1- 7 381 022
- US-B1- 7 381 022

## Description

### 1. Domaine de l'invention

Le domaine de l'invention est celui de la logistique en magasin et en entrepôt, et en particulier du transport et du tri des articles.

Plus précisément, l'invention concerne un système et un procédé de remise d'une commande.

L'invention trouve notamment une application dans le retrait de produits alimentaires ou de grande consommation en point retrait, aussi appelé « Drive », et dans la livraison de marchandises en points relais.

### 2. Etat de la technique

Il est connu dans les magasins proposant un service de livraison de commandes effectuées en lignes à un point retrait, dit service de « drive », qu'un ou plusieurs préparateurs entreposent les articles d'une commande collectés dans des sacs sur des étagères, en attendant que le client vienne retirer sa commande. Le tri des articles d'une commande peut être mis en œuvre lors de la tournée de ramassage ou au moment de mettre la commande sur étagère.

Cette technique de préparation d'une commande présente de nombreux inconvénients.

Elle nécessite en effet un espace de stockage conséquent pour entreposer les commandes et une main d'œuvre importante.

En outre, avec cette technique un client qui vient retirer sa commande peut se voir imposer un temps d'attente plus ou moins long, le temps qu'un préparateur aille chercher sa commande dans les étagères pour lui remettre, ou dans le cas où tous les préparateurs sont occupés à effectuer une tournée de ramassage et ne sont pas disponibles pour lui remettre sa commande.

Afin de limiter le temps d'attente d'un client, on a pensé à déposer les sacs dans des bacs qui sont envoyés dans un espace de stockage d'un système automatisé de stockage de bacs permettant une remise facilitée de sa commande au client.

Un inconvénient de cette technique mettant en œuvre des bacs est qu'elle nécessite de gérer des bacs.

Un autre inconvénient de cette technique est qu'elle est couteuse à mettre en œuvre. On a par ailleurs constaté que dans beaucoup de magasins des Grandes et Moyennes Surfaces, son coût d'installation s'avère prohibitif. Le document JP 2002 249209 A divulgue un système selon le préambule de la revendication 1 et un procédé selon le préambule de la revendication 12.

### 3. Objectifs de l'invention

L'invention a donc notamment pour objectif de pallier les inconvénients de l'état de la technique cités ci-dessus.

Plus précisément l'invention a pour objectif de fournir une technique de remise d'une commande qui limite le nombre d'interventions des opérateurs.

Un objectif de l'invention est également de fournir une telle technique de remise d'une commande qui soit simple à mettre en œuvre.

Un autre objectif de l'invention est de fournir une telle technique de remise d'une commande qui libère de l'espace au sol.

Encore un objectif de l'invention est de fournir une telle technique qui soit d'un coût de revient et d'un coût d'exploitation réduits.

### 4. Exposé de l'invention

Ces objectifs, ainsi que d'autres qui apparaitront par la suite sont atteints à l'aide d'un système de remise automatique d'une commande, constituée d'une pluralité d'articles stockés dans un bâtiment, dans un ou plusieurs sacs sur un emplacement de prélèvement de ladite commande situé à l'extérieur dudit bâtiment.

Selon l'invention, un tel système de remise automatique d'une commande comprend :
- un module de transport monté au moins partiellement en hauteur et comprenant :
   - au moins une piste de déplacement dont au moins une portion substantielle s'étend à l'intérieur dudit bâtiment ;
   - une pluralité d'éléments de suspension de sacs à ladite piste ;
   - des moyens de déplacement automatique desdits éléments de suspension sur ladite piste ;
- des moyens d'association à un ou des éléments de suspension auxquels sont suspendus ledit ou lesdits sacs contenant les différents articles de ladite commande, d'une information d'identification de ladite commande;
- des moyens de signalement et/ou de détection de la présence d'un utilisateur auquel la commande doit être remise, ou d'un camion destiné à prendre en charge ladite commande, à proximité dudit emplacement de prélèvement ; ledit module de transport comprenant en outre des moyens d'actionnement desdits moyens de déplacement automatique configurés pour déplacer lesdits éléments de suspension auxquels sont suspendus lesdits sacs, jusqu'audit emplacement de prélèvement lorsque lesdits moyens de signalement et/ou de détection émettent un signal de confirmation de la présence dudit utilisateur ou dudit camion à proximité dudit emplacement de prélèvement.

Ainsi, de façon inédite, l'invention propose de suspendre des sacs contenant les articles d'une commande en hauteur pour pouvoir les stocker et les transporter jusqu'à un emplacement de prélèvement à l'extérieur d'un magasin, où la commande va être remise d'une façon automatique au client destinataire de la commande, ou à un camion de livraison à son arrivée, à proximité de l'emplacement de prélèvement.

L'emplacement de prélèvement peut être par exemple un lieu de parking dédié d'un « drive » et être situé plus ou moins proche d'un magasin, ou le volume de stockage d'un camion.

Dans le cadre de l'invention, on entend par le terme « à proximité » que le destinataire de la commande est à moins de quelques mètres, voire quelques centaines de mètres de l'emplacement de prélèvement. Ainsi par exemple, il peut être prévu que les moyens de signalement et/ou de détection soit configurés pour émettre un signal de confirmation de la présence de l'utilisateur ou du camion lorsque celui-ci s'arrête à proximité immédiate de l'emplacement de prélèvement ou bien, dans un autre mode de réalisation, lorsque l'utilisateur ou le camion franchit une entrée du parking du magasin ou passe à un endroit spécifique du parking.

Il convient enfin de noter que du fait que les sacs sont suspendus en hauteur, l'invention permet un gain de place au sol très important.

Par ailleurs, dans le cadre de l'invention, les sacs peuvent être formés en tout ou partie de portions rigides, par exemple pour pouvoir porter des articles lourds, ou pour protéger des objets fragiles, tels que des boites d'œufs, par exemple.

On notera également que dans le cadre de l'invention la piste s'étend à la fois à l'intérieur et à l'extérieur du bâtiment .

Selon un mode de réalisation particulier de l'invention, ladite piste comprend une chaîne logée dans un rail.

Dans un mode de réalisation avantageux de l'invention, ladite piste est fixée à un plafond ou à une mezzanine dudit bâtiment.

Dans une variante de ce mode de réalisation de l'invention, il peut être envisagé de fixer ladite piste à une structure de portage dédiée, comprenant par exemple un ou plusieurs portiques.

De façon avantageuse, ledit module de transport comprend des moyens de tri des éléments de suspension destinés à regrouper les éléments de suspension supportant des sacs contenant des articles de la commande et auxquels a été associée une information d'identification de ladite commande dans au moins une zone dudit bâtiment.

Ainsi les sacs contenant les articles d'une même commande peuvent être regroupés préalablement, ce qui permet une remise plus rapide de la commande.

Selon un aspect de l'invention, lesdits moyens de signalement et/ou de détection comprennent au moins un élément de signalement et/ou de détection appartenant au groupe comprenant au moins :
- lecteur de code barre ;
- lecteur de QR code ;
- lecteur de bande magnétique ou de puce ;
- clavier numérique permettant de saisir un code ;
- application dédiée téléchargeable sur un terminal de l'utilisateur ;
- lecteur d'identification biométrique, tel qu'un lecteur d'empreinte digitale ;
- capteur de présence ;
- système de géolocalisation.

Dans un mode de réalisation particulier de l'invention, lesdits.éléments de suspension appartiennent au groupe comprenant au moins :
- crochets ;
- barre.

Avantageusement, ledit module de transport comprend des moyens de stockage temporaire d'au moins un desdits sacs suspendus à un élément de suspension dans au moins une zone de stockage en hauteur dudit bâtiment.

Il peut être prévu plusieurs zones de stockage en hauteur pour stocker des articles de différentes natures.

Dans un mode de réalisation particulièrement avantageux de l'invention, ladite zone de stockage est une zone à température contrôlée.

Ces zones peuvent être des zones de conservation au froid positif ou des zones de conservation à des températures négatives, adaptées pour des produits surgelés. Ainsi, on prélever à l'avance des produits frais ou surgelés dans les rayons d'un magasin ou des chambres froides et les stocker sur le module de transport dans l'attente de remettre la commande au client ou à un camion venu prendre en charge la commande.

Selon un mode de réalisation particulier de l'invention, ledit module de transport comprend un tunnel enveloppant une portion de ladite piste, s'étendant à l'extérieur dudit bâtiment au-dessus d'une voie de circulation pour véhicule automobile.

Ainsi, le destinataire d'une commande peut accéder aisément à l'emplacement de prélèvement avec son véhicule et peut charger directement sa commande dans son coffre.

Selon un mode de réalisation particulier de l'invention, ledit emplacement de prélèvement de ladite commande est le volume de chargement d'un camion.

Ainsi, on peut charger aisément une commande dans un camion, qui va assurer sa livraison sur un point relai.

Dans un mode de réalisation particulier de l'invention, un système de remise automatique d'une commande tel que décrit ci-dessus comprend un module d'entreposage de sacs, destiné à être monté dans le volume de chargement dudit camion, et des moyens de connexion dudit module d'entreposage de sacs avec ladite piste, comprenant des moyens de transfert des éléments de suspension auxquels sont suspendus lesdits sacs dudit module d'entreposage vers ladite piste.

Ainsi il est possible de transférer directement les sacs d'une commande dans un camion, ou inversement de vider un camion, sans intervention humaine.

L'invention concerne également un procédé de remise automatique d'une commande, constituée d'une pluralité d'articles stockés dans un bâtiment, sur un emplacement de prélèvement de ladite commande situé à l'extérieur dudit bâtiment.

Selon l'invention, un tel procédé comprend les étapes suivantes :
- collecte des articles constitutifs de ladite commande et dépose desdits articles dans au moins un sac ;
- suspension dudit ou desdits sacs à un ou plusieurs éléments de suspension de sacs à une piste d'un module de transport montée au moins partiellement en hauteur ;
- association audit ou auxdits éléments de suspension auxquels sont suspendus ledit ou lesdits sacs contenant les différents articles de ladite commande d'une information d'identification de ladite commande ;
- signalement et/ou de détection de la présence d'un utilisateur auquel la commande doit être remise, ou d'un camion destiné à prendre en charge ladite commande, à proximité dudit emplacement de prélèvement comprenant une étape d'émission d'un signal de confirmation de la présence dudit utilisateur ou dudit camion à proximité dudit emplacement de prélèvement ;
- à réception dudit signal par une unité récepteur, transport dudit ou desdits éléments de suspension auxquels a été associée une information d'identification de la commande sur ladite piste jusqu'audit emplacement de prélèvement comprenant une étape d'actionnement de moyens de déplacement automatique desdits éléments de suspension sur ladite piste.

Selon un aspect avantageux de l'invention, un tel procédé comprend une étape de tri des éléments de suspension comprenant une étape de regroupement des éléments de suspension portant les sacs de la commande et auxquels a été associée une information d'identification de ladite commande dans au moins une zone dudit bâtiment.

### 5. Liste des figures

D'autres caractéristiques et avantages de l'invention apparaitront plus clairement à la lecture de la description suivante de deux modes de réalisation de l'invention, donnés à titre de simples exemples illustratifs et non limitatifs, et des dessins annexés parmi lesquels :
- La figure 1 est une vue de dessus d'un exemple de mode de réalisation d'un système de remise de commande selon l'invention;
- la figure 2 est une vue en perspective du système de remise de commande présenté en référence à la figure 1 ;
- la figure 3 est une vue de détail en coupe partielle de la portion du système de remise d'une commande présenté en référence à la figure 1, située à l'extérieur de l'entrepôt du supermarché ;
- la figure 4 est une vue partielle en perspective d'un autre exemple de mode de réalisation d'un système de remise de commande selon l'invention ;
- la figure 5 est une représentation synoptique, sous forme de schéma-blocs, d'un exemple de procédé de remise d'une commande selon l'invention ;
- la figure 6 est une vue du poste de chargement du système de remise de commande présenté en référence à la figure 1.

### 6. Description détaillée de l'invention

### 6.1. Exemple de mode de réalisation de l'invention

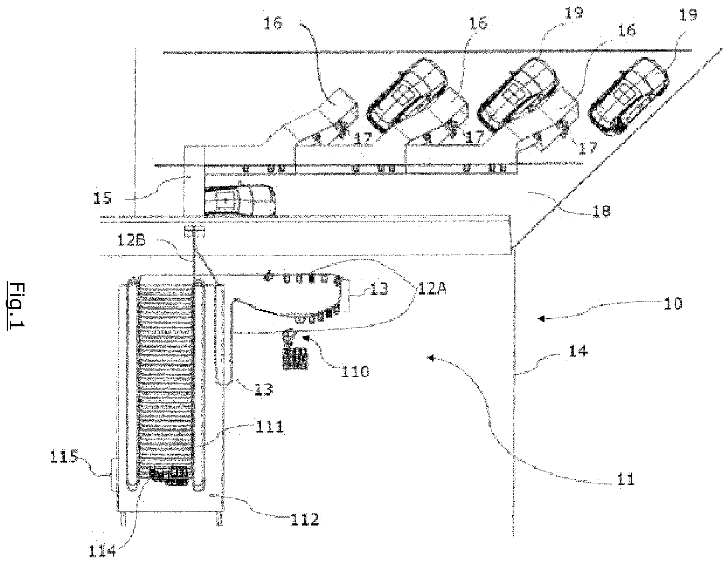

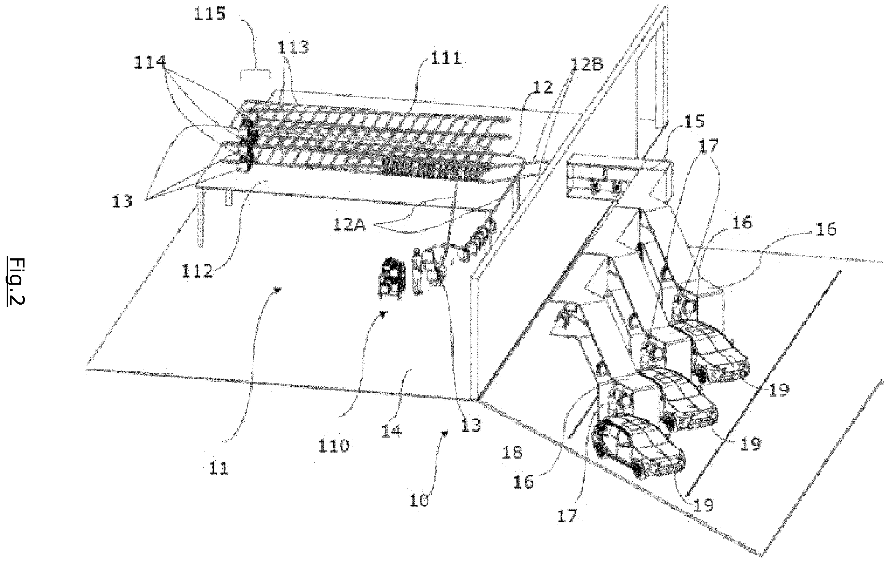

On a illustré sur les figures 1 et 2, respectivement dans une vue de dessus et une vue en perspective, un exemple de mode de réalisation d'un système 10 de remise d'une commande selon l'invention, mis en œuvre sur le site d'un supermarché.

Ce système 10 comprend un module de transport 11 présentant une piste de circulation 12 de sacs 13 formée d'un assemblage de tronçons de rail dans lesquels sont montés des chaines motorisées.

Dans ce mode de réalisation de l'invention, chaque sac 13 est suspendu à des maillons d'une chaine de la piste par des crochets. Le déplacement des sacs sur un tronçon de rail est assuré automatiquement par entrainement de la chaîne montée dans ce rail et des dispositifs de transfert, tels que par exemple des poussoirs, sont prévus pour faire passer les sacs 13 d'une chaine à l'autre.

La piste 12 est implantée dans un entrepôt 14 adjacent à la surface de vente du supermarché et s'étend à l'extérieur de l'entrepôt au travers d'un tunnel 15 qui débouche sur trois postes de prélèvement 16 des commandes présentant une ouverture pour permettre aux clients 17 destinataires d'un commande de retirer les sacs contenant les différents articles de leur commande.

Le tunnel en hauteur chemine avantageusement au-dessus d'une voie de circulation 18 permettant aux clients de garer leur véhicule 19 à portée de bras d'un poste de prélèvement de commande.

La piste 12 est constituée d'une première boucle 12A qui permet de faire circuler les sacs entre un poste de chargement 110 et une zone de stockage 111 supportée par une mezzanine 112, et d'une seconde boucle 12B qui permet d'acheminer des sacs entre la zone de stockage 111 et les postes de prélèvement 16.

Comme on peut le voir sur la figure 2, la piste présente trois séries de peignes 113 superposées au niveau de la zone de stockage 111. Des dents 114 des peignes situées à une extrémité distale 115 de la zone de stockage 111 sont plongées dans une ambiance de conservation au froid positif, ce qui permet d'y stocker des produits frais. La température au niveau des autres dents des peignes est la température ambiante de l'entrepôt.

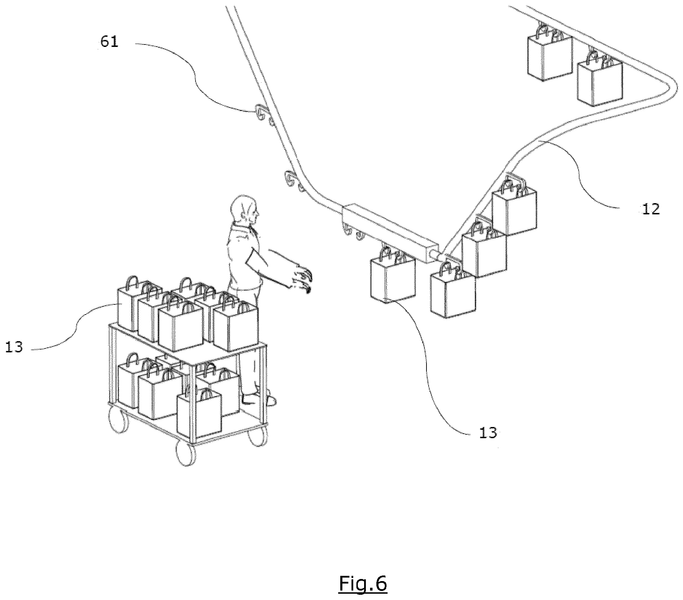

Au niveau du poste de chargement 110, les préparateurs qui arrivent avec un ou plusieurs sacs contenant une partie d'une commande suspendent les sacs un à un aux crochets qui se présentent en face d'eux, comme on peut le voir sur la figure 6.

On notera que chacune des crochets 61 porte un identifiant, qui consiste dans ce mode de réalisation particulier de l'invention en un code-barre imprimé sur une bande plastique clippée sur la base du crochet 61. Cet identifiant est lu par un lecteur de code-barre lorsque un crochet se présente face au préparateur et transmis au système de gestion d'entrepôt du supermarché (aussi désigné habituellement par son acronyme en anglais WMS, pour « Warehouse Management System »).

Une fois un sac 13 suspendu à un crochet 61, il suffit au préparateur de confirmer sur un terminal, tel qu'une tablette tactile, qu'un sac contenant une partie de la commande a bien été suspendu à un crochet.

Le système de gestion d'entrepôt affecte alors dans sa base de données d'affection des crochets aux commandes, le numéro de la commande qui vient d'être validée par le préparateur sur son terminal au crochet dont l'identifiant a été scanné.

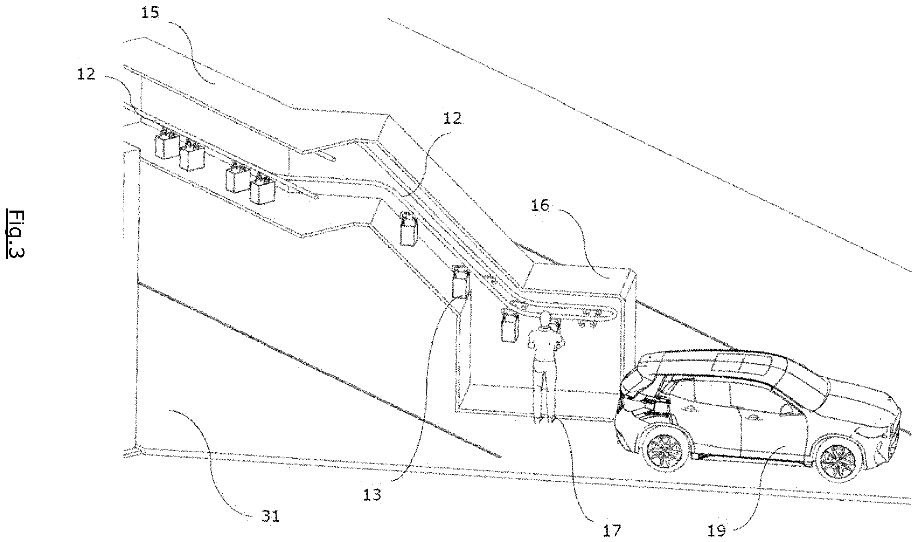

Sur la figure 3, qui est une vue de détail en coupe partielle de la portion du système de remise d'une commande 10 située à l'extérieur de l'entrepôt du supermarché, on peut voir que chaque poste de prélèvement 16 est équipé d'un écran tactile 31 qui permet au client de saisir un code numérique attribué à sa commande, qu'il a reçu par email ou par SMS (acronyme en anglais de « Short Message Service » ) sur son smartphone. La saisie de ce code permet au client de signaler sa présence devant l'un des postes de prélèvement au système de gestion d'entrepôt, lequel va alors adresser un signal au système 10 contenant des instructions de remettre la commande du client au poste de prélèvement où le client 17 a saisi son code. Le système de remise de commande 10 va alors acheminer les différents sacs contenant des parties de la commande du client vers le tunnel 15 et distribuer ces différents sacs sur le tronçon de piste reliant le tunnel au poste de prélèvement 16.

Dans des variantes de ce mode de réalisation particulier de l'invention, il peut également être envisagé de permettre au client venant récupérer sa commande de signaler sa présence à proximité du poste de prélèvement en scannant un code barre ou un QR code qu'il a reçu sur son smartphone, par lecture de la bande magnétique d'une carte du magasin attribué à ce client, en s'identifiant à l'aide d'un lecteur d'identification biométrique, ou en utilisant une application dédiée téléchargée sur son smartphone. Dans encore d'autres variantes de ce mode de réalisation particulier de l'invention, il peut être envisagé d'utiliser un système de géolocalisation du smartphone du client afin de détecter sa présence à proximité d'un poste de prélèvement.

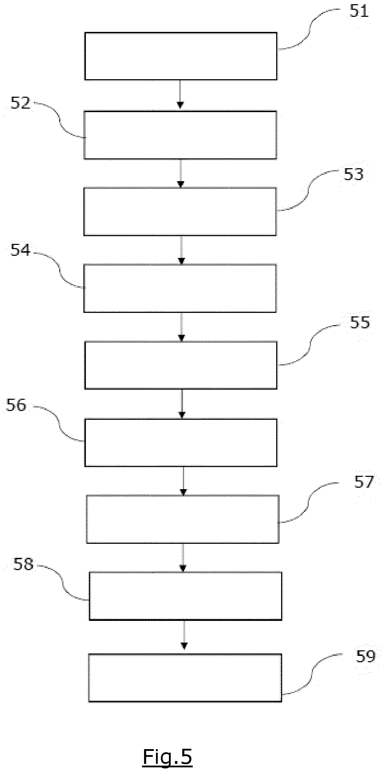

On a représenté sur la figure 5, les étapes d'un exemple de mode de réalisation d'un procédé de remise d'une commande selon l'invention mis en œuvre à l'aide du système de remise d'une commande 10, sous forme de diagramme.

Après que le client a passé une commande de différents articles sur le site internet du magasin, le système de gestion d'entrepôt envoie des instructions aux préparateurs d'aller collecter les articles de la commande dans les zones des produits frais, des produits surgelés, et des produits secs et/ou dans la réserve du magasin (étape 51). On notera que lors de cette étape un préparateur peut collecter dans une même tournée de ramassage des articles pour plusieurs commandes distinctes. Lors de cette collecte les préparateurs déposent les articles ensemble dans un même sac ou dans plusieurs sacs (étape 52).

Dans une étape 53, les préparateurs se rendent dès qu'ils ont achevé leur tournée de ramassage au poste de chargement 110 et suspendent les sacs chacun à un crochet du système de remise d'une commande 10 qui se présente successivement au poste de chargement.

Il convient de noter que, dans le cadre de l'invention, les préparateurs peuvent accéder au poste de chargement sans ordre prédéfini et suspendre des sacs dans n'importe quel ordre aux crochets qui se présentent au poste de chargement 110.

Lors de cette étape 53, l'identifiant de chacun des crochets qui se présentent successivement au poste de chargement est scanné et transmis au système de gestion d'entrepôt.

Après avoir déposé un sac, les préparateurs confirment que le chargement a été effectué à l'aide d'une tablette tactile et renseignent à quelle commande correspond le sac qui a été suspendu au crochet et quel type d'article contient le sac. Dans une variante de ce mode de réalisation de l'invention, il peut également être envisagé que les opérateurs scannent un code imprimé sur les sacs des commandes. Selon cette variante des codes spécifiques peuvent être attribués aux sacs destinés à contenir des produits frais ou des produits surgelés afin de pouvoir distinguer ces sacs des autres sacs. Une information d'identification de la commande est alors associée automatiquement par le système de gestion d'entrepôt au crochet en attente au poste de chargement (étape 54) et ce crochet est entraîné sur la piste du module de déplacement, afin de laisser la place à un nouveau crochet.

Les sacs contenant des articles d'une commande sont ensuite entreposés, dans une étape 55, dans une zone des peignes de la zone de stockage en fonction de leur contenu, les articles frais étant par exemple dirigés vers la zone 115.

Lorsqu'un client signale qu'il est arrivé à proximité d'un poste de prélèvement de commande en entrant le code de sa commande sur le clavier tactile du poste de prélèvement (étape 56), un signal de confirmation est émis par le système de gestion et transmis, par exemple par ondes radio au module de transport 11 (étape 57), lequel va alors dans une première étape 58 procéder à un tri des crochets afin de regrouper les crochets auxquels a été associée une information d'identification de la commande, et par conséquent les sacs qui sont suspendus à ces crochets, dans une zone tampon de la piste 12, avant de les transporter, dans une étape 59, au travers du tunnel 15 jusqu'au poste de prélèvement auquel le client s'est présenté, afin qu'il puisse retirer les articles de sa commande.

### 6.2. Autre exemple de mode de réalisation de l'invention

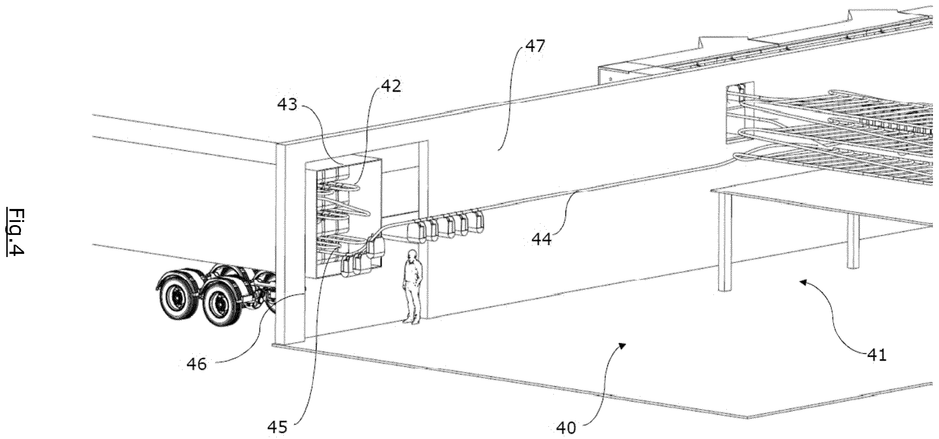

On a représenté sur la figure 4 un autre exemple d'un système de remise d'une commande 40 selon l'invention, permettant de remettre une commande à un camion de livraison de commandes sur des points relais.

Comme on peut le voir sur la figure 4, ce système 40 comprend, outre un module de transport 41 sensiblement identique à celui du système de remise d'une commande 11 décrit précédemment, un module motorisé 42 d'entreposage de sacs suspendus à des crochets, monté dans le volume de chargement d'un camion 43.

Ce module d'entreposage 42 peut être connecté à la piste 44 du module de transport 41, via une unité de connexion 45 équipé d'un dispositif de transfert des sacs suspendus à des crochets entre la piste 44 et le module d'entreposage 42, en reculant l'arrière du camion jusqu'au niveau d'une porte 46 percée dans les parois extérieures de l'entrepôt 47.

Il convient de noter que dans ce mode réalisation de l'invention, le dispositif de transfert de sacs suspendus à des crochets a un fonctionnement réversible et peut aussi bien permettre de transférer les sacs suspendus à des crochets de la piste 44 vers le module d'entreposage 42 que du module d'entreposage vers la piste 42, afin de décharger des sacs du camion.

## Revendications

1. Système (10 ; 40) de remise automatique d'une commande, constituée d'une pluralité d'articles stockés dans un bâtiment, dans un ou plusieurs sacs (13) sur un emplacement de prélèvement de ladite commande situé à l'extérieur dudit bâtiment, comprenant:
- un module de transport (11 ; 41) monté au moins partiellement en hauteur et comprenant :
- au moins une piste de déplacement (12 ; 44);
- une pluralité d'éléments de suspension de sacs (61) à ladite piste ;
- des moyens de déplacement automatique desdits éléments de suspension sur ladite piste ;
- des moyens d'association à un ou des éléments de suspension auxquels sont suspendus ledit ou lesdits sacs (13) contenant les différents articles de ladite commande, d'une information d'identification de ladite commande; le système étant **caractérisé en ce que** :
- ladite piste s'étend à la fois à l'intérieur et à l'extérieur du bâtiment, au moins une portion substantielle s'étendant à l'intérieur dudit bâtiment ; et **en ce que** le système comprend :
- des moyens de signalement et/ou de détection de la présence d'un utilisateur auquel la commande doit être remise, ou d'un camion destiné à prendre en charge ladite commande, à proximité dudit emplacement de prélèvement ; ledit module de transport comprenant en outre des moyens d'actionnement desdits moyens de déplacement automatique configurés pour déplacer lesdits éléments de suspension (61) auxquels sont suspendus lesdits sacs sur ladite piste de déplacement (12), jusqu'audit emplacement de prélèvement lorsque lesdits moyens de signalement et/ou de détection émettent un signal de confirmation de la présence dudit utilisateur ou dudit camion (43) à proximité dudit emplacement de prélèvement.

2. Système de remise automatique d'une commande (10) selon la revendication 1, **caractérisé en ce que** ladite piste (12) comprend une chaîne logée dans un rail.

3. Système de remise automatique d'une commande (10 ) selon l'une quelconque des revendications 1 et 2, **caractérisé en ce que** ladite piste (12 ) est fixée à un plafond ou à une mezzanine (112) dudit bâtiment.

4. Système de remise automatique d'une commande selon l'une quelconque des revendications 1 à 3, **caractérisé en ce que** ledit module de transport (11) comprend des moyens de tri des éléments de suspension destinés à regrouper les éléments de suspension supportant des sacs contenant des articles de la commande et auxquels a été associée une information d'identification de ladite commande dans au moins une zone dudit bâtiment.

5. Système de remise automatique d'une commande selon l'une quelconque des revendications 1 à 4, **caractérisé en ce que** lesdits moyens de signalement et/ou de détection comprennent au moins un élément de signalement et/ou de détection appartenant au groupe comprenant au moins :
- lecteur de code barre ;
- lecteur de QR code ;
- lecteur de bande magnétique ou de puce ;
- clavier numérique permettant de saisir un code ;
- application dédiée téléchargeable sur un terminal de l'utilisateur ;
- lecteur d'identification biométrique, tel qu'un lecteur d'empreinte digitale ;
- capteur de présence ;
- système de géolocalisation.

6. Système de remise automatique d'une commande selon l'une quelconque des revendications 1 à 5, **caractérisé en ce que** lesdits éléments de suspension appartiennent au groupe comprenant au moins :
- crochets (61);
- barre.

7. Système de remise automatique d'une commande selon l'une quelconque des revendications 1 à 6, **caractérisé en ce que** ledit module de transport comprend des moyens de stockage temporaire d'au moins un desdits sacs (13) suspendus à un élément de suspension (61) dans au moins une zone de stockage (111) en hauteur dudit bâtiment.

8. Système de remise automatique d'une commande selon la revendication 7, **caractérisé en ce que** ladite zone de stockage (111) est une zone à température contrôlée.

9. Système de remise automatique d'une commande selon l'une quelconque des revendications 1 à 8, **caractérisé en ce que** ledit module de transport comprend un tunnel (15) enveloppant une portion de ladite piste (12), s'étendant à l'extérieur dudit bâtiment au-dessus d'une voie de circulation pour véhicule automobile.

10. Système de remise automatique d'une commande selon l'une quelconque des revendications 1 à 9, **caractérisé en ce que** ledit emplacement de prélèvement de ladite commande est le volume de chargement d'un camion (43).

11. Système de remise automatique d'une commande selon la revendication 10, **caractérisé en ce qu'**il comprend un module d'entreposage de sacs (42), destiné à être monté dans le volume de chargement dudit camion (43), et des moyens de connexion dudit module d'entreposage de sacs avec ladite piste (12), comprenant des moyens de transfert des éléments de suspension auxquels sont suspendus lesdits sacs dudit module d'entreposage vers ladite piste (44).

12. Procédé de remise automatique d'une commande, constituée d'une pluralité d'articles stockés dans un bâtiment, sur un emplacement de prélèvement de ladite commande situé à l'extérieur dudit bâtiment, comprenant les étapes suivantes :
- collecte des articles constitutifs de ladite commande et dépose desdits articles dans au moins un sac (13) ;
- suspension dudit ou desdits sacs à un ou plusieurs éléments de suspension de sacs (61) à une piste (12 ; 44) d'un module de transport (11 ; 41) montée au moins partiellement en hauteur;
- association audit ou auxdits éléments de suspension (61) auxquels sont suspendus ledit ou lesdits sacs (13) contenant les différents articles de ladite commande d'une information d'identification de ladite commande ; le procédé étant **caractérisé en ce que** :
- ladite piste s'étend à la fois à l'intérieur et à l'extérieur du bâtiment; et **en ce que** le procédé comprend les étapes :
- signalement et/ou de détection de la présence d'un utilisateur auquel la commande doit être remise, ou d'un camion (43) destiné à prendre en charge ladite commande, à proximité dudit emplacement de prélèvement comprenant une étape d'émission d'un signal de confirmation de la présence dudit utilisateur ou dudit camion à proximité dudit emplacement de prélèvement ;
- à réception dudit signal par une unité récepteur, transport dudit ou desdits éléments de suspension auxquels a été associée une information d'identification de la commande sur ladite piste (12 ; 44) jusqu'audit emplacement de prélèvement comprenant une étape d'actionnement de moyens de déplacement automatique desdits éléments de suspension (61) sur ladite piste (12; 44).

## Patentansprüche

1. System (10; 40) zur automatischen Übergabe einer Bestellung, bestehend aus einer Mehrzahl von in einem Gebäude gelagerten Artikeln, in einem oder mehreren Beuteln (13) an einer außerhalb des Gebäudes gelegenen Entnahmestelle für die Bestellung, umfassend:
- ein wenigstens teilweise in der Höhe angebrachtes Transportmodul (11; 41), das umfasst:
- wenigstens eine Bewegungsbahn (12; 44),
- eine Mehrzahl von Beutelaufhängeelementen (61) an der Bahn,
- Mittel zur automatischen Bewegung der Aufhängeelemente an der Bahn,
- Mittel zur Zuordnung einer Identifikationsinformation der Bestellung zu einem oder mehreren Aufhängeelementen, an denen der oder die Beutel (13), die die verschiedenen Artikeln der Bestellung enthalten, aufgehängt sind;
wobei das System **dadurch gekennzeichnet ist, dass**:
- sich die Bahn sowohl innerhalb als auch außerhalb des Gebäudes erstreckt, wobei sich wenigstens ein wesentlicher Abschnitt innerhalb des Gebäudes erstreckt, und dass das System umfasst:
- Mittel zur Signalisierung und/oder Erkennung der Anwesenheit eines Nutzers, dem die Bestellung übergeben werden soll, oder eines Lastwagens, der dazu bestimmt ist, die Bestellung abzuholen, in der Nähe der Entnahmestelle, wobei das Transportmodul ferner Mittel zum Betätigen der automatischen Bewegungsmittel umfasst, die dazu ausgebildet sind, die Aufhängeelemente (61), an denen die Beutel aufgehängt sind, an der Bewegungsbahn (12) bis zu der Entnahmestelle zu bewegen, wenn die Signalisierungs- und/oder Erkennungsmittel ein Signal zur Bestätigung der Anwesenheit des Nutzers oder des Lastwagens (43) in der Nähe der Entnahmestelle senden.

2. System zur automatischen Übergabe einer Bestellung (10) nach Anspruch 1, **dadurch gekennzeichnet, dass** die Bahn (12) eine in einer Schiene aufgenommene Kette umfasst.

3. System zur automatischen Übergabe einer Bestellung (10) nach einem der Ansprüche 1 und 2, **dadurch gekennzeichnet, dass** die Bahn (12) an einer Decke oder einem Zwischengeschoss (112) des Gebäudes befestigt ist.

4. System zur automatischen Übergabe einer Bestellung nach einem der Ansprüche 1 bis 3, **dadurch gekennzeichnet, dass** das Transportmodul (11) Mittel zum Sortieren der Aufhängeelemente umfasst, die dazu bestimmt sind, diejenigen Aufhängeelemente zu gruppieren, die Beutel mit Artikeln der Bestellung tragen und denen in wenigstens einem Bereich des Gebäudes eine Identifikationsinformation der Bestellung zugeordnet wurde.

5. System zur automatischen Übergabe einer Bestellung nach einem der Ansprüche 1 bis 4, **dadurch gekennzeichnet, dass** die Signalisierungs- und/oder Erkennungsmittel wenigstens ein Signalisierungs- und/oder Erkennungselement umfassen, das zu der Gruppe gehört, die wenigstens umfasst:
- ein Barcode-Lesegerät,
- ein QR-Code-Lesegerät,
- ein Magnetstreifen- oder Chip-Lesegerät,
- eine numerische Tastatur, die es ermöglicht, einen Code zu erfassen,
- eine spezielle Anwendung, die auf ein Endgerät des Nutzers heruntergeladen werden kann,
- ein biometrisches Identifikationslesegerät, wie beispielsweise ein Fingerabdrucklesegerät,
- einen Anwesenheitssensor,
- ein Geolokalisierungssystem.

6. System zur automatischen Übergabe einer Bestellung nach einem der Ansprüche 1 bis 5, **dadurch gekennzeichnet, dass** die Aufhängeelemente zu der Gruppe gehören, die wenigstens umfasst:
- Haken (61),
- Stange.

7. System zur automatischen Übergabe einer Bestellung nach einem der Ansprüche 1 bis 6, **dadurch gekennzeichnet, dass** das Transportmodul Mittel zur vorübergehenden Lagerung wenigstens eines der an einem Aufhängeelement (61) aufgehängten Beutel (13) in wenigstens einem Lagerbereich (111) in der Höhe des Gebäudes umfasst.

8. System zur automatischen Übergabe einer Bestellung nach Anspruch 7, **dadurch gekennzeichnet, dass** der Lagerbereich (111) ein temperaturgeregelter Bereich ist.

9. System zur automatischen Übergabe einer Bestellung nach einem der Ansprüche 1 bis 8, **dadurch gekennzeichnet, dass** das Transportmodul einen Tunnel (15) umfasst, der einen Abschnitt der Bahn (12) umgibt, der sich außerhalb des Gebäudes über einer Fahrbahn für Kraftfahrzeuge erstreckt.

10. System zur automatischen Übergabe einer Bestellung nach einem der Ansprüche 1 bis 9, **dadurch gekennzeichnet, dass** die Entnahmestelle der Bestellung der Laderaum eines Lastwagens (43) ist.

11. System zur automatischen Übergabe einer Bestellung nach Anspruch 10, **dadurch gekennzeichnet, dass** es ein Beutellagerungsmodul (42) umfasst, das dazu bestimmt ist, im Laderaum des Lastwagens (43) angebracht zu werden, und Mittel zum Verbinden des Beutellagerungsmoduls mit der Bahn (12) umfasst, die Mittel zum Transfer der Aufhängeelemente, an denen die Beutel des Beutellagerungsmoduls aufgehängt sind, zur Bahn (44) umfassen.

12. Verfahren zur automatischen Übergabe einer Bestellung, das aus einer Mehrzahl von in einem Gebäude gelagerten Artikeln besteht, an einer außerhalb des Gebäudes gelegenen Entnahmestelle für diese Bestellung, wobei das Verfahren die folgenden Schritte umfasst:
- Aufnahme der die Bestellung bildenden Artikel, und Ablage dieser Artikel in wenigstens einen Beutel (13),
- Aufhängen des oder der Beutel an einem oder mehreren Beutelaufhängeelementen (61) an einer Bahn (12; 44) eines Transportmoduls (11; 41), die wenigstens teilweise in der Höhe angebracht ist,
- Zuordnung einer Identifikationsinformation der Bestellung zu dem oder den Aufhängeelementen (61), an denen der oder die Beutel (13) aufgehängt sind, die die verschiedenen Artikel der Bestellung enthalten, wobei das Verfahren **dadurch gekennzeichnet ist, dass**:
- sich die Bahn sowohl innerhalb als auch außerhalb des Gebäudes erstreckt, und dass das Verfahren die folgenden Schritte umfasst:
- Signalisierung und/oder Erkennung der Anwesenheit eines Nutzers, dem die Bestellung übergeben werden soll, oder eines Lastwagens (43), der dazu bestimmt ist, die die Bestellung abzuholen, in der Nähe der Entnahmestelle, umfassend einen Schritt des Sendens eines Signals zur Bestätigung der Anwesenheit des Nutzers oder des Lastwagens in der Nähe der Entnahmestelle,
- bei Empfang des Signals durch eine Empfangseinheit Transport des oder der Aufhängeelemente, denen eine Identifikationsinformation der Bestellung zugeordnet wurde, an der Bahn (12; 44) zu der Entnahmestelle, umfassend einen Schritt der Betätigung von Mitteln zum automatischen Bewegen der Aufhängeelemente (61) an der Bahn (12; 44).

## Claims

1. A system (10, 40) for automatically delivering an order, consisting of a plurality of articles stored in a building, in one or more bags (10) to a location for picking said order located outside said building, comprising :
- a transport module (11; 41) mounted at least partially at height and comprising:
- at least one travel track (12; 44),
- a plurality of bag suspension elements (61) to said track;
- means for automatically moving said suspension elements on said track;
- means for associating with one or more suspension elements from which said bag or bags (13) containing the various articles of said order are suspended, information for identifying said order; the system being **characterized in that**
- the at least one travel track, extends into said building and outside said building, at least a substantial portion extending inside said building;
- means for signalling and/or detecting the presence of a user to whom the order is to be delivered, or of a truck intended to take charge of said order, in the vicinity of said picking location;
said transport module further comprising means for actuating said automatic displacement means configured to displace said suspension elements (61) from which said bags are suspended on said travel track (12), to said pick-up location when said signalling and/or detection means emit a signal confirming the presence of said user or said truck (43) in the vicinity of said pick-up location.

2. The system (10) for automatically delivering an order (10) of claim 1, **characterised in that** said track (12) comprises a chain housed in a rail.

3. The system (10) for automatically delivering an order according to any one of claims 1 and 2, **characterised in that** said track (12) is attached to a ceiling or a mezzanine (112) of said building.

4. The system for automatically delivering an order according to any one of claims 1 to 3, **characterised in that** said transport module (11) comprises means for sorting the suspension elements intended to group together the suspension elements supporting bags containing articles of the order and to which information identifying said order has been associated in at least one zone of said building.

5. The system for automatically delivering an order according to any one of claims 1 to 4, **characterised in that** said signalling and/or detection means comprise at least one signalling and/or detection element belonging to the group comprising at least:
- barcode reader;
- QR code reader;
- magnetic strip or chip reader;
- numeric keypad to enter a code;
- dedicated application downloadable on a user's terminal;
- biometric identification reader, such as a fingerprint reader;
- presence sensor;
- geolocation system.

6. The system (10) for automatically delivering an order according to any one of claims 1 to 5, **characterised in that** said suspension elements belong to the group comprising at least:
- hooks (61);
- bar.

7. The system (10) for automatically delivering an order according to any one of claims 1 to 6, **characterised in that** said transport module comprises means for temporarily storing at least one of said bags (13) suspended from a suspension element (61) in at least one high storage area (111) of said building.

8. The system (10) for automatically delivering an order according to claim 7, **characterised in that** said storage area (111) is a temperature controlled area.

9. The system (10) for automatically delivering an order according to any one of claims 1 to 8, **characterised in that** said transport module comprises a tunnel (15) enveloping a portion of said track (12), extending outside said building above a motor vehicle traffic lane.

10. The system (10) for automatically delivering an order according to any one of claims 1 to 9, **characterised in that** said pick-up location of said order is the loading volume of a truck (43).

11. The system (10) for automatically delivering an order according to claim 10, **characterised in that** it comprises a bag storage module (42), intended to be mounted in the loading volume of said truck (43), and means for connecting said bag storage module with said track (12), comprising means for transferring the suspension elements from which said bags are suspended from said storage module to said track (44).

12. A method of automatically delivering an order, consisting of a plurality of articles stored in a building, to a pick-up location for said order located outside said building, comprising the following steps:
- collecting the articles constituting said order and deposit of said articles in at least one bag (13);
- suspending said bag or bags from one or more bag suspension elements (61) on a track (12;44) of a transport module mounted at least partially at height;
- associating with said suspension element(s) (61) from which said bag(s) (13) containing the different articles of said order are suspended an identification information of said order;
the method being **characterized in that** :
- the travel track extends simultaneously into said building and outside said building and **in that** the method comprises the steps of :
- signalling and/or detecting the presence of a user to whom the order is to be delivered, or of a truck (43) intended to take charge of said order, in the vicinity of said pick-up location, comprising a step of transmitting a signal confirming the presence of said user or said truck in the vicinity of said pick-up location;
- upon reception of said signal by a receiver unit, transport of said suspension element or elements to which has or have been associated an identification information of the order on said track (12; 44) to said pick-up location comprising a step of actuating means for automatic displacement of said suspension elements (61) on said track (12, 44).
